# EUROPÄISCHE PATENTSCHRIFT

(11) **EP 3 208 071 B1**
(45) Veröffentlichungstag und Bekanntmachung des Hinweises auf die Patenterteilung: **01.05.2019**
(21) Anmeldenummer: 16156235.0
(22) Anmeldetag: 18.02.2016
(51) Int. Cl.: B29C 65/20, B29C 65/10, B29C 65/72, B29L 7/00

(54) **SCHWEISSAUTOMAT**
AUTOMATIC WELDING MACHINE
MACHINE DE SOUDAGE AUTOMATIQUE

(43) Veröffentlichungstag der Anmeldung: 23.08.2017
(73) Patentinhaber: Leister Technologies AG, 6056 Kägiswil (CH)
(72) Erfinder: Niederberger, Adolf, 6056 Kägiswil (CH); Frei, Mathias, 6005 Luzern (CH); von Wyl, Bruno, 6056 Kägiswil (CH)
(74) Vertreter: Klocke, Peter

(56) Entgegenhaltungen:
- EP-A2- 0 406 223
- DE-U1- 29 719 436
- FR-A1- 2 339 476

## Beschreibung

Die Erfindung betrifft einen Schweißautomaten zum Verschweißen von Kunststoffbahnen, mit einem fahrbaren Tragrahmen, einer Heizeinrichtung zum Anschmelzen der Kunststoffbahnen, mindestens zwei gegenüberliegenden Ausleger mit Anpress- und Vorschubrollen, mindestens einer Antriebseinrichtung sowie einer am Tragrahmen gelagerten Spannvorrichtung mit einem Betätigungselement zum reversiblen Aneinanderfügen der Ausleger und Aufbringen einer Spannkraft zwischen diesen, mit einer offenen Stellung, in der die gegenüberliegende Ausleger durch einen Spalt getrennt sind, und einer geschlossenen Stellung, in der die gegenüberliegenden Ausleger aneinander gefügt und gegen einander verspannt sind, wobei ein Ausleger schwenkbar gegenüber dem anderen Ausleger gelagert ist, und durch das Betätigen der Spannvorrichtung aus der offenen in die geschlossenen Stellung bringbar ist, wobei die Spannvorrichtung ein mit dem Tragrahmen verbundenes Tragelement und ein federndes Element zur Erzeugung der Spannkraft aufweist.

Derartige Schweißautomaten sind allgemein bekannt und werden zum Verschweißen von Folien, beispielsweise aus Kunststoff, Planen und anderen flächigen Materialien eingesetzt. Dabei werden die Kunststoffbahnen im Nahtbereich mittels Wärmeeintrag plastifiziert und anschließend unter Druckeinwirkung zusammengepresst. Zur Aufbringung des Druckes sind Spannvorrichtungen an den Schweißautomaten vorgesehen. Des Weiteren sind auch Einrichtungen zum Schließen oder Öffnen von Systemkomponenten, wie Anpress-oder Vorschubrollen vorhanden. So müssen beispielsweise beim überlappenden Verschweißen von Folien die einzelnen Folienbahnen an der geplanten Nahtstelle überlappend angeordnet und fixiert werden, außerdem eine Wärmequelle auf die miteinander zu verschweißende Bahnen herangeführt und ein Fügedruck aufgebracht werden. Üblicherweise werden dabei die einzelnen Funktionen mechanisch und steuerungstechnisch in einzelne Schritte aufgeteilt, was jedoch die Handhabung umständlicher und zeitintensiver gestaltet.

So offenbart die DE 297 19 436 U1 eine solche Schweißvorrichtung zum überlappenden Verschweißen von Folienrändern, mit Anpressrollen zum Zusammenpressen der Folienränder nach deren Erhitzung, die auf Achsen sitzen, von denen wenigstens eine beweglich in Richtung auf die andere Achse und umgekehrt geführt ist.

Weiterhin beschreibt die EP 0 406 223 A2 eine Schweißvorrichtung zum randseitigen Verbinden überlappender Bahnen aus thermoplastischem Kunststoff, welche zwei Schweißrollen aufweist. Eine der Schweißrollen ist an einem am Grundkörper der Vorrichtung verschwenkbar gelagerten Hebel angeordnet, dem eine Stelleinrichtung zugeordnet ist. Der von der Stelleinrichtung auf den Hebel ausgeübte Druck wird über einen Drucksensor erfasst und an eine Steuer- bzw. Anzeigeeinheit abgegeben. Die Vorrichtung weist einen dem Spalt zwischen den beiden Schweißrollen und zugeordneten keilförmigen Heizkörper auf, der im Grundkörper verschiebbar geführt ist. Der keilförmige Heizkörper ist an einem Träger, über den er im Grundkörper verstellbar ist, über einen Drucksensor abgestützt, der dem Anpressdruck des keilförmigen Heizkörpers gegen die zwischen die Schweißrollen einlaufenden Bahnen aus Kunststoff entsprechende Signale an eine Steuer- bzw. Anzeigeeinheit abgibt. Im keilförmigen Heizkörper ist weiterhin ein Temperaturfühler vorgesehen, der seine Signale an eine Thermostatsteuerung abgibt.

Die FR 2 339 476 A1 offenbart ein weiteres Schweißgerät zum Verschweißen von Kunststoffbahnen, mit Gehäuserahmen und einem Heizteil zum Erhitzen der Bahnen, speziell zum Auskleiden von Bauten, beispielsweise Tunnelbauten.

Der Erfindung liegt daher die Aufgabe zu Grunde einen Schweißautomaten mit alternativen Maßnahmen und Ausgestaltungen der bekannten kompakten Spannvorrichtung eines Schweißautomaten vorzuschlagen. Diese Aufgabe wird erfindungsgemäß durch einen Schweißautomaten mit den Merkmalen des Anspruchs 1 gelöst. Weitere vorteilhafte Ausgestaltungen sind den rückbezogenen Ansprüchen zu entnehmen.

Danach wird bei dem erfindungsgemäßen Schweißautomaten eine Spannvorrichtung vorgesehen, um ein reversibles Aneinanderfügen von gegenüberliegenden Auslegern und Aufbringen einer Spannkraft zwischen diesen vorzusehen. Dies erfolgt durch ein Schwenken eines an der Spannvorrichtung schwenkbar angeordneten Doppeldrehgelenks über das ein an der Spannvorrichtung verdrehsicher angeordneter Ausleger gegenüber dem gegenüberliegenden Ausleger geschwenkt wird. Zeitgleich wird durch das Schwenken des Doppeldrehgelenks ein an der Spannvorrichtung angeordnetes federndes Element gestaucht bzw. entspannt. Das federnde Element ist an seinem einen Ende fest an einem an dem Tragrahmen befestigten Tragelement für die Spannvorrichtung und an seinem anderen Ende schwenkbar am Betätigungshebel so angeordnet, dass es exzentrisch zu der Drehachse des Betätigungshebels geschwenkt wird, was in einer Stauchung/Entspannung des federnden Elements resultiert. Die Drehachse des Betätigungshebels ist von der Drehachse des federnden Elements verschieden. Die beiden Achsen laufen parallel zu einander. Dabei gibt es zwei Endstellungen. In einer offenen Endstellung sind die gegenüberliegenden Ausleger durch einen maximalen Spalt getrennt, während in einer geschlossenen Endstellung die gegenüberliegenden Ausleger aneinander gefügt sind. Zudem wirkt in der geschlossenen Endstellung die rückstellende Federkraft des federnden Elements als Drehmoment auf den schwenkbaren Ausleger, so dass die gegenüberliegenden Ausleger gegeneinander verspannt werden. Die Spannvorrichtung arbeitet reversibel, d. h. dass kein irreversibles Fügen der beiden Ausleger aneinander stattfindet und der schwenkbare Ausleger wieder in die offene Stellung geschwenkt werden kann. Die Ausleger können alleine als Greifer fungieren oder beliebige Werkzeuge an ihren freien Enden aufnehmen.

Die zwischen den Auslegern wirkende Spannkraft ist abhängig von dem durch das federnde Element auf den schwenkbaren Ausleger aufgebrachtem Drehmoment und der Länge des schwenkbaren Auslegers. Das Drehmoment ergibt sich aus dem Kreuzprodukt aus Abstandsvektor (Drehpunkt des Betätigungshebels zu Angriffspunkt des federnden Elements an Tragelement) und Kraftvektor des federnden Elements. Demnach kann die Spannkraft durch ein Austauschen des federnden Elements mit einer anderen Federkennlinie an den jeweiligen Einsatzzweck angepasst werden.

Das Tragelement und der schwenkbare Ausleger sind fest miteinander verbunden und um eine gemeinsame Achse schwenkbar angeordnet, so dass bei entsprechender Betätigung des Betätigungshebels der Ausleger um diese Achse geschwenkt und die Vorschubrolle in die geschlossene bzw. offene Stellung gebracht wird.

In einer bevorzugten Ausführungsform der Spannvorrichtung ist ein Austauschen des federnden Elements vorgesehen. Das federnde Element ist leicht zugänglich an der Spannvorrichtung angeordnet und kann mit wenigen Handgriffen, beispielsweise durch Aufschrauben einer Mutter und Herausziehen des federnden Elements, ausgebaut werden. Ein anderes federndes Element kann ebenso schnell und unkompliziert eingesetzt werden. Statt das federnde Element auszutauschen, kann es auch vorgespannt werden, um in einem anderen Federkennlinienbereich zu arbeiten. Die Vorspannung kann beispielsweise mittels einer Mutter schnell und einfach eingestellt werden. Es bietet sich an, beide Möglichkeiten zum Einstellen der Spannkraft in einer Spannvorrichtung vorzusehen.

Es hat sich als vorteilhaft erwiesen, als federndes Element eine gewundene Torsionsfeder, sogenannte Schraubenfeder, zu verwenden. Schraubenfedern sind kompakt aufgebaut und können in ihrer Charakteristik durch Bereiche mit veränderlichem Drahtdurchmesser, variabler Steigung oder sich veränderndem Federdurchmesser vielfältig gestaltet werden.

Eine weitere bevorzugte Ausführungsform der Spannvorrichtung sieht einen fest mit dem Doppeldrehgelenk verbundenen Betätigungshebel vor. Zum Schwenken des Doppeldrehgelenks ist ein gewisses Drehmoment notwendig. Die beiden Drehpunkte des Doppeldrehgelenks an dem Betätigungshebel sind relativ nah beabstandet, so dass durch die Hebelwirkung des Betätigungshebels die notwendige Kraft zum Bedienen der Spannvorrichtung merklich reduziert wird. Der Betätigungshebel kann als Verlängerung des Doppeldrehgelenks auch einteilig mit diesem ausgebildet sein. Dadurch wird die Anzahl der Einzelteile der Spannvorrichtung reduziert und die Vorrichtung insgesamt robuster und weniger wartungsintensiv gestaltet. Für bessere Haptik kann der Betätigungshebel ergonomisch geformt sein und/oder einen Griff aufweisen.

Als Alternative oder Ergänzung zum händischen Aufbringen des erforderlichen Drehmoments zum schwenken des Doppeldrehgelenks, kann das Doppeldrehgelenk mittels eines Motors geschwenkt werden. Der Motor ist in dieser Ausführungsform bevorzugt an der Spannvorrichtung angeordnet und bringt das erforderliche Drehmoment an der Drehachse des Doppeldrehgelenks auf. Bei dem Motor handelt es sich bevorzugt um einen Elektromotor. Die Steuerung des Motors erfolgt über einen Taster, Schalter oder Drehknopf, der an der Spannvorrichtung selbst oder an dem Schweißautomaten angeordnet sein kann.

In einer weiteren Ausführungsform kann die Spannvorrichtung im Sinne einer besseren Handhabung jeweils in der offenen und der geschlossenen Stellung arretiert werden. Dazu durchschreitet eine Wirkachse des federnden Elements, in der die Federkraft wirkt, in der jeweiligen Endstellung des Doppeldrehgelenks die Drehachse des Doppeldrehgelenks. Dadurch wirkt ein Teil der Federkraft gegen ein Herausschwenken des Doppeldrehgelenks aus der jeweiligen Endstellung, wodurch ein ungewolltes Öffnen/Schließen der Ausleger bzw. ein Abfall der Spannkraft vermieden wird. Die Arretierfunktion erlaubt einen bequemen und sicheren Zugang an und zwischen die Ausleger, um beispielsweise neues Material zum Einspannen zu positionieren oder die von den Auslegern getragene Werkzeuge an- und abzumontieren.

Eine vorteilhafte Ausführungsform der Spannvorrichtung sieht neben den beschriebenen Grundfunktionen (Aneinanderfügen von gegenüberliegenden Auslegern und Aufbringen einer Spannkraft zwischen diesen) die Integration weiterer sinnvoller Funktionen je nach Anwendungsfall vor. Über weitere an der Spannvorrichtung angeordnete Doppeldrehgelenke können zusätzliche mit der Spannvorrichtung über die Doppeldrehgelenke verbundenen Einrichtungen bewegt werden. Es können lineare Bewegungen, wie beim Stauchen und Entspannen des federnden Elements, oder schwenkende Bewegungen, wie bei dem schwenkbaren Ausleger, realisiert werden. Ein wesentlicher Vorteil der Integration weiterer Funktionen ist die synchrone Ausführung all dieser Funktionen durch Schwenken des zentralen Doppeldrehgelenks in einem Schritt. Dadurch können weitere Werkzeuge, beispielsweise eine Heizeinrichtung zum Anschmelzen von zwischen den Auslegern eingespanntem Material, an die Fügestelle zwischen den geschlossenen Auslegern herangeführt werden, wobei das Werkzeug entlang einer linearen Lagerung in die Einsatzposition herangefahren oder aus einer Warteposition herangeschwenkt wird.

Bei einer weiteren Ausführungsform ist die Heizeinrichtung als ein Heißluftgebläse mit einer auf den Nahtbereich der zu verschweißenden Kunststoffbahnen ausgerichteten Heißluftdüse ausgebildet. Der Heißluftstrahl kann entweder gleichmäßig verteilt entlang des Nahtbereichs auf das zu verschweißende Material gerichtet sein oder durch mehrere Düsenöffnungen, welche über die Breite der Heißluftdüse verteilt sind, punktuell konzentriert werden.

Alternativ zum Heißluftgebläse kann der Wärmeeintrag in das zu verschweißende Material auch mittels eines Heizkeils erfolgen. In diesem Fall ist der Heizkeil zwischen den zu verschweißenden Kunststoffbahnen in einer Zuführeinrichtung angeordnet und muss vor Beginn des Schweißvorganges an die Nahtstelle herangeführt und in dieser Stellung arretiert werden.

Eine kombinierte Heizeinrichtung sowohl mit einem Heißluftgebläse als auch einem Heizkeil in einem Schweißautomat ist von Vorteil, da somit eine breitere Auswahl an Kunststoffen bezüglich Material und Bahndicke mit einem Apparat bearbeitet werden kann.

Durch das Umlegen des Betätigungshebels in die Endstellung, bei der die gegenüberliegenden Anpress- und Vorschubrollen geschlossen sind, wird gleichzeitig die jeweilige Heizeinrichtung an die zu verschweißenden Kunststoffbahnen herangefahren. Dazu ist die Heizeinrichtung beweglich (beispielsweise schwenkbar oder linear verfahrbar) am Tragrahmen angeordnet und wird über ein exzentrisch an dem Betätigungshebel angeschlossenen Hebel über eine Halterung in die Schweißposition ein- und aus der Schweißposition ausgebracht.

Die über den Betätigungshebel einhändig zu bedienende Spannvorrichtung führt somit die gegenüberliegenden Anpress- und Vorschubrollen an die Kunststofffolien, bringt den nötigen Anpressdruck auf und lässt die eventuell vorhandene Heizeinrichtung ausfahren. Die Kombination dieser Schritte vereinfacht die Bedienung des Schweißautomaten.

Nachfolgend wird die Erfindung anhand eines in den Zeichnungen dargestellten Ausführungsbeispiels näher erläutert. Weitere Merkmale der Erfindung ergeben sich aus der folgenden Beschreibung des Ausführungsbeispiels der Erfindung in Verbindung mit den Ansprüchen und den beigefügten Zeichnungen. Die einzelnen Merkmale der Erfindung können für sich allein oder zu mehreren bei unterschiedlichen Ausführungsformen der Erfindung verwirklicht werden. Es zeigen:
- Figur 1: eine isometrische Darstellung des erfindungsgemäßen Schweißautomaten mit gegenüberliegenden Anpress- und Vorschubrollen in einer offenen Stellung;
- Figur 2: eine isometrische Darstellung des erfindungsgemäßen Schweißautomaten mit gegenüberliegenden Anpress- und Vorschubrollen in einer geschlossenen Stellung und aufgebrachter Anpresskraft;
- Figur 3a: eine schematische Darstellung nur der die Spannvorrichtung betreffenden Elemente mit gegenüberliegenden Anpress- und Vorschubrollen in einer offenen Stellung;
- Figur 3b: eine um 180° gedrehte Ansicht der Figur 3a;
- Figur 4a: eine schematische Schnittdarstellung nur der die Spannvorrichtung betreffenden Elemente mit gegenüberliegenden Anpress- und Vorschubrollen in einer Zwischenstellung;
- Figur 4b: eine um 180° gedrehte Ansicht der Figur 4a;
- Figur 5a: eine schematische Schnittdarstellung nur der die Spannvorrichtung betreffenden Elemente mit gegenüberliegenden Anpress- und Vorschubrollen in einer geschlossenen Stellung mit herausgefahrenem Heizkeil;
- Figur 5b: eine um 180° gedrehte Ansicht der Figur 5a.

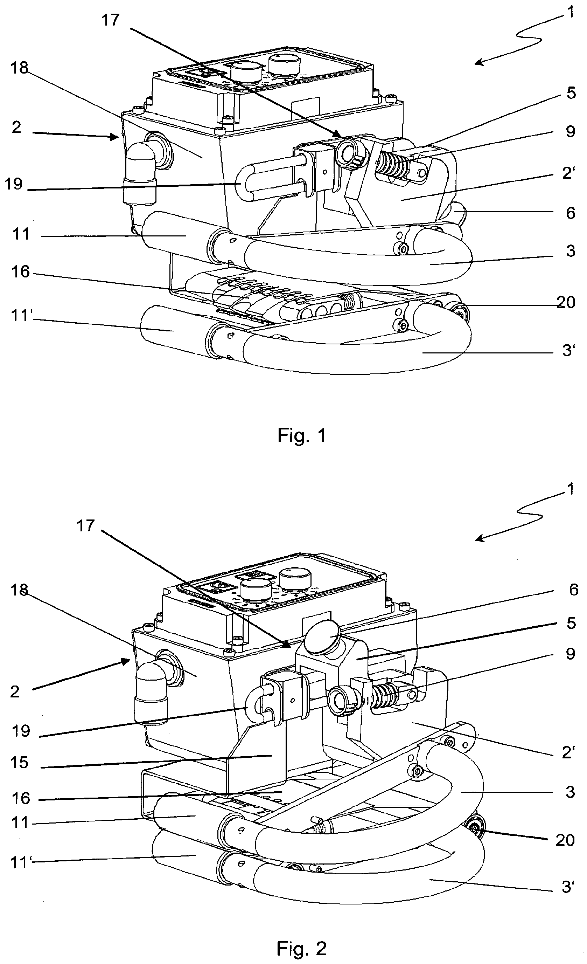

Die Figur 1 zeigt einen erfindungsgemäßen Schweißautomaten 1 zum Verschweißen von in der Zeichnung nicht dargestellten Kunststoffbahnen. Bei dem dargestellten Schweißautomaten handelt es sich um eine beispielhafte Ausführungsform, bei der die Anpress- und Vorschubrollen 11 bzw. 11' jeweils über eine nicht dargestellte biegsame Welle angetrieben werden. Ein Tragrahmen 2 des Schweißautomaten 1 wird auf Fahrrollen 20 verfahrbar getragen. Der Tragrahmen 2 umfasst beispielhaft ein Gehäuse 18, das eine in der Zeichnung nicht dargestellte Antriebseinrichtung mit einem Antriebsmotor und mindestens einem Getriebe beherbergt. An dem Gehäuse 18 bzw. dem Tragrahmen 2 ist auch ein zu dem Tragrahmen 2 gehörender nicht sichtbarer Lagerbock befestigt auf dem die Spannvorrichtung 17 gelagert und fixiert ist. Zu der Spannvorrichtung 17 gehört ein Tragelement 2', das in diesem Ausführungsbeispiel an dem Gehäuse 18 befestigt ist, an dem wiederum seitlich zwei Ausleger 3, 3' angeordnet sind. Der untere, feste Ausleger 3' ist verdrehsicher mit dem Tragrahmen 2 verbunden, während der obere, schwenkbare Ausleger 3 in einer senkrechten Ebene zum Tragrahmen 2 über das Tragelement 2' drehbar gelagert ist. Beide Ausleger 3, 3' sind in diesem Ausführungsbeispiel U-förmig geformt und tragen an ihrem freien Ende jeweils eine Anpress- und Vorschubrolle 11 bzw. 11'.

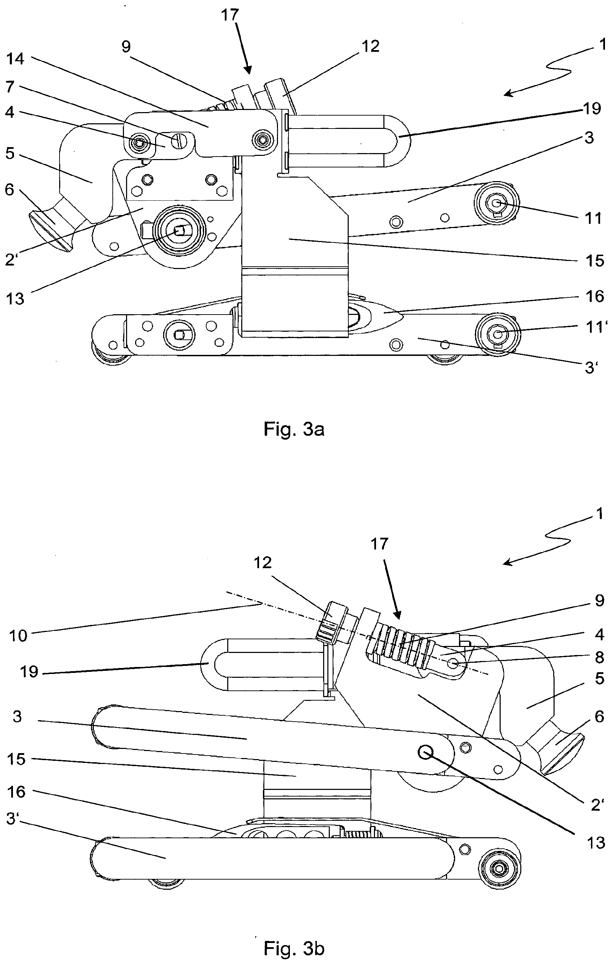

Über ein Schwenken des schwenkbaren Auslegers 3 wird ein Spalt zwischen den Anpress- und Vorschubrollen 11 bzw. 11' geschlossen und die dazwischen angeordneten Kunststoffbahnen für den Schweißvorgang geklemmt. Das Schwenken des schwenkbaren Auslegers 3 erfolgt mittels eines Betätigungshebels 5 der Spannvorrichtung 17, die im Nachfolgenden in Verbindung mit den Figuren 3 bis 5 näher erläutert wird.

Des Weiteren ist in Figur 1 als zusätzliche Ausgestaltung des Schweißautomaten 1 ein Heizelementträger 15 mit einem Heizkeil 16 dargestellt. Der Heizkeil 16 ist in der dargestellten Ausführungsform linear beweglich an dem Tragrahmen 2 gelagert und muss für den Schweißprozess an eine Schweißnaht zwischen den Anpress- und Vorschubrollen 11 bzw. 11' herangefahren werden. Der Position des Heizkeils 16 kann ebenfalls über den Betätigungshebel 5 gesteuert werden. Alternativ oder zusätzlich kann die Heizelementträger 15 mit einem in der abgebildeten Ausführungsform nicht vorgesehenen Heißluftgebläse und einer auf die miteinander zu verschweißenden Kunststoffbahnen gerichtete Heißluftdüse realisiert werden.

Die Figur 2 zeigt den in Figur 1 beschriebenen Schweißautomaten 1, jedoch mit dem in eine andere Endstellung umgelegten Betätigungshebel 5. In dieser Stellung sind die gegenüberliegenden Anpress- und Vorschubrollen 11 bzw. 11' geschlossen.

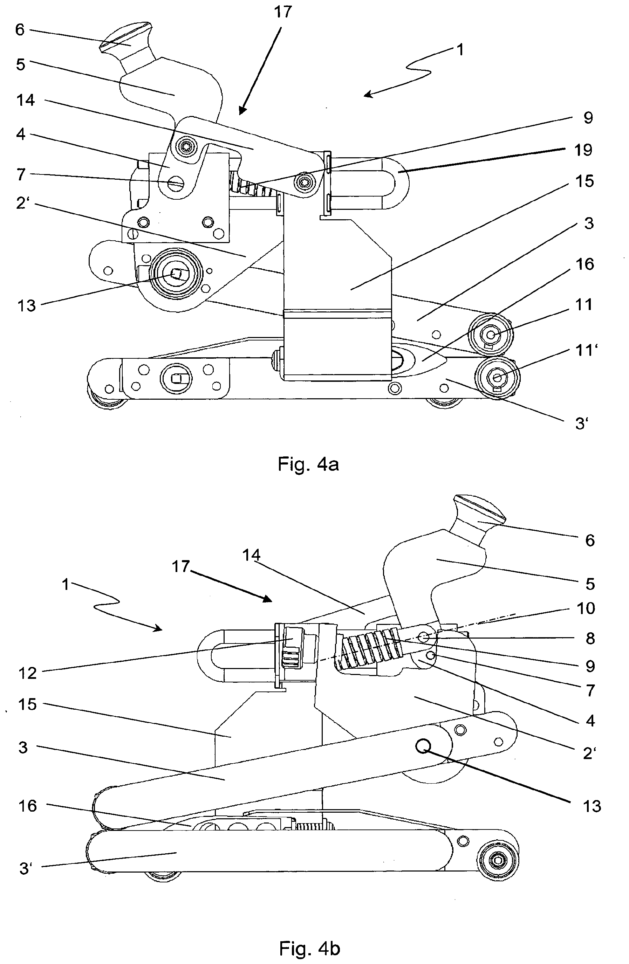

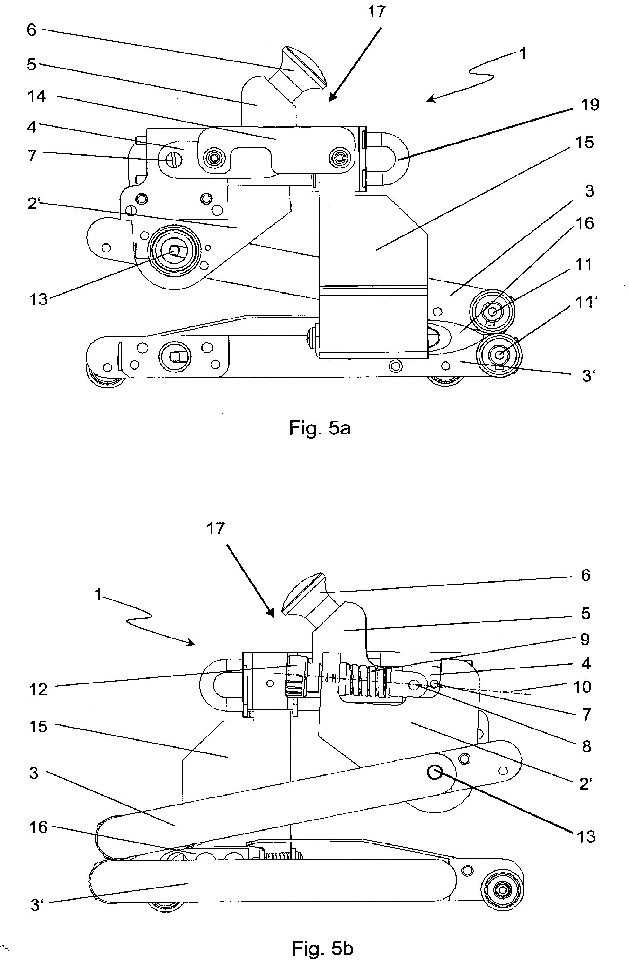

Die Figuren 3a bis 5b zeigen den erfindungsgemäßen Schweißautomaten 1 in schematischer Schnittdarstellung. Einer besseren Übersichtlichkeit wegen ist das Gehäuse 18 nicht dargestellt. Die Figuren 3a bis 5b zeigen als ein Bauteil des beispielhaften Schweißautomaten 1 die erfindungsgemäße Spannvorrichtung 17 zum reversiblen Aneinanderfügen der gegenüberliegenden Ausleger 3, 3' und Aufbringen einer Spannkraft zwischen diesen. Die Figuren bilden die Spannvorrichtung 17 jeweils paarweise in einer bestimmten Stellung ab. Ausgehend von der in den Figuren 3a und 3b gezeigten offenen Stellung der gegenüberliegenden Ausleger 3, 3', zeigen die Figuren 4a und 4b die Spannvorrichtung 17 in einer Zwischenstellung mit aneinandergefügten Ausleger 3, 3', aber noch ohne aufgebrachte Spannkraft, wohingegen die Figuren 5a und 5b die Spannvorrichtung 17 in einer geschlossenen Endstellung mit aneinandergefügten Ausleger 3, 3' und aufgebrachter Spannkraft zeigen.

Bei der dargestellten Spannvorrichtung 17 handelt es sich um eine bevorzugte Ausführungsform der Erfindung mit einem Doppeldrehgelenk 4, das einseitig verlängert und als ein Betätigungshebel 5 ausgeformt ist. Für eine bessere Haptik ist am Betätigungshebel 5 ein Griff 6 angeordnet.

Das Doppeldrehgelenk 4 bzw. der Betätigungshebel 5 weist zwei Drehachsen 7 und 8 auf. Über die Drehachse 7 ist der Betätigungshebel 5 schwenkbar an dem Tragrahmen 2 und dem Tragelement 2' gelagert. Das federnde Element 9 in Form einer Schraubenfeder 9 ist mit ihrem einen Ende um die Drehachse 8 drehbar gelagert. An ihrem anderen Ende ist die Schraubenfeder 9 fest an der Spannvorrichtung 17 angeordnet ist. Die Federkraft der Schraubenfeder 9 wirkt in einer Wirkachse 10 der Schraubenfeder 9. In den beiden Endstellungen (offen und geschlossen) der Spannvorrichtung 17 durchschreitet die Wirkachse 10 die Drehachse 7 des Doppeldrehgelenk 4, so dass ein Teil der Federkraft gegen ein Herausschwenken des Doppeldrehgelenks 4 aus der jeweiligen Endstellung gerichtet ist. Ein ungewolltes Öffnen bzw. Schließen der Ausleger 3, 3' wird somit vermieden. Diese Arretierfunktion der Spannvorrichtung 17 verbessert die Handhabung (freier Zugang zu den Werkzeugen 11, 11' an den freien Enden der Ausleger 3, 3') und erhöht zugleich die Sicherheit.

Das dargestellte Ausführungsbeispiel der Spannvorrichtung 17 weist eine austauschbare und einstellbare Schraubenfeder 9 auf. Über eine Mutter 12 kann die Schraubenfeder 9 vorgespannt werden und somit in einem anderen Federkennlinienbereich betrieben werden. Durch Abschrauben der Mutter 12 kann die Schraubenfeder 9 ausgebaut und ausgetauscht werden. Damit ist die Schraubenfeder 9 sowohl in der Art der Federkennlinie (linear, progressiv, degressiv) als auch in ihrer Federkraft in einem breiten Bereich an den jeweiligen Einsatzbereich anpassbar und die Spannvorrichtung 17 für vielfältige Anwendungsfälle einsetzbar. Die definierte Federkraft bringt ein Moment auf das Tragelement 2' um einen Lagerpunkt 13 auf, an dem das Tragelement 2' und der mit ihr verdrehsicher verbundene Ausleger 3 schwenkbar an dem Tragrahmen 2 des Schweißautomaten 1 gelagert sind. In Figur 4a und 4b ist die Schraubenfeder 9 von Anfang bis Ende gebogen, auch wenn das in den Figuren nicht so deutlich ersichtlich ist.

Die in den Figuren dargestellte Spannvorrichtung 17 kann als zusätzliches Ausführungsbeispiel neben dem Aneinanderfügen von gegenüberliegenden Ausleger 3, 3' und Aufbringen einer definierten Spannkraft zwischen diesen noch eine weitere Funktion übernehmen. Hierzu ist ein weiteres Doppeldrehgelenk 14 vorgesehen, das einerseits mit dem Betätigungshebel 5 und andererseits mit einem Heizelementträger 15 verbunden ist. Das zweite Doppeldrehgelenk 14 ist derart ausgestaltet, dass es an einer Drehachse an dem Betätigungshebel 5 angebracht ist, die parallel zu der Drehachse 7 des Betätigungshebels 5 verläuft. Über die Doppeldrehgelenke 4 und 14 wird der mit dem Betätigungshebel 5 verbundene Heizelementträger 15 mit einem Heizkeil 16 an eine Nahtstelle zwischen den Werkzeugen 11, 11' herangefahren. Das Heranfahren der Heizkeils 16 erfolgt synchron zum Aneinanderfügen der Werkzeuge 11, 11' tragenden Ausleger 3, 3' und dem Aufbringen einer Spannkraft. Der Heizelementträger 15 ist hierfür linear verfahrbar entlang von am Tragrahmen 2 befestigten Führungen 19 angeordnet. Das zusätzliche Doppeldrehgelenk 14 ist schwenkbar an dem Betätigungshebel 5, exzentrisch zu der Drehachse 7 des Betätigungshebels 5 gelagert, so dass beim Umlegen des Betätigungshebels 5 die Heizelementträger 15 an die gewünschte Stelle geschoben wird. Diese Bewegung des beispielhaften Heizkeils 16 ist deutlich aus den Figuren 3 bis 5 ersichtlich.

Die in den Figuren 3 bis 5 dargestellte und erläuterte Spannvorrichtung 17 wurde in Verbindung mit einem Schweißautomat gemäß den Figuren 1 und 2 als Ausführungsbeispiel beschrieben. Die Spannvorrichtung 17 ist jedoch nicht auf diese spezielle Ausgestaltung von Schweißautomaten beschränkt, sondern kann bei allen Schweißautomaten der eingangs erläuterten Art eingesetzt werden. Das zusätzliche Heranführen des Heizkeils 16 ist ebenfalls eine optionale Ausgestaltung der Spannvorrichtung 17. So kann außerdem in einem alternativen Ausführungsbeispiel die Heizeinrichtung 16 über eine am Betätigungshebel 5 angebrachte Verlängerung in die gewünschte Position gebracht, ohne ein weiteres Doppeldrehgelenk 14.

## Patentansprüche

1. Schweißautomat (1) zum Verschweißen von Kunststoffbahnen, mit einem fahrbaren Tragrahmen (2), einer Heizeinrichtung (16) zum Anschmelzen der Kunststoffbahnen, mindestens zwei gegenüberliegenden Ausleger (3, 3') mit Anpress- und Vorschubrollen (11; 11'), mindestens einer Antriebseinrichtung sowie einer am Tragrahmen (2) gelagerten Spannvorrichtung (17) mit einem Betätigungselement (5) zum reversiblen Aneinanderfügen der Ausleger (3, 3') und Aufbringen einer Spannkraft zwischen diesen, mit einer offenen Stellung, in der die gegenüberliegende Ausleger (3, 3') durch einen Spalt voneinander getrennt sind, und einer geschlossenen Stellung, in der die gegenüberliegenden Ausleger (3, 3') aneinander gefügt und gegen einander verspannt sind, wobei ein Ausleger (3) schwenkbar gegenüber dem anderen Ausleger (3') gelagert ist, und durch das Betätigen der Spannvorrichtung (17) aus der offenen in die geschlossenen Stellung bringbar ist,
wobei die Spannvorrichtung (17) ein mit dem Tragrahmen (2) verbundenes Tragelement (2') und ein federndes Element (9) zur Erzeugung der Spannkraft aufweist und das federnde Element (9) an seinem Ende fest an dem Tragelement (2') verbunden ist, **dadurch gekennzeichnet, dass** das federnde Element (9) an seinem anderen Ende um eine Achse (8) schwenkbar mit dem als ein Betätigungshebel (5) ausgebildeten Betätigungselement verbunden ist,
der Betätigungshebel (5) an dem Tragrahmen (2) um eine weitere Achse (7) schwenkbar gelagert ist und damit für das federnde Element (9) ein Doppeldrehgelenk (4) bildet, und
wobei durch das Schwenken des Betätigungshebels (5) aus der offenen in die geschlossene Stellung das federnde Element (9) gespannt und dadurch der schwenkbare Ausleger (3) des Tragelements (2') aus der offenen in die geschlossene Stellung bringbar ist, wobei das Tragelement (2') und der schwenkbare Ausleger (3) fest miteinander verbunden und um eine gemeinsame Achse (13) schwenkbar ist.

2. Schweißautomat (1) nach Anspruch 1, **dadurch gekennzeichnet, dass** die Spannkraft durch ein Austauschen und/oder Vorspannen des federnden Elements (9) definiert ist.

3. Schweißautomat (1) nach einem der vorangegangenen Ansprüche, **dadurch gekennzeichnet, dass** das federnde Element (9) als Schraubenfeder (9) ausgeführt ist.

4. Schweißautomat (1) nach einem der vorangegangenen Ansprüche, **dadurch gekennzeichnet, dass** die Spannvorrichtung (17) über den fest mit dem Doppeldrehgelenk (4) verbundenen Betätigungshebel (5) bedienbar ist und/oder das Doppeldrehgelenk (4) über einen Motor zwischen der offenen und der geschlossenen Stellung schwenkbar ist.

5. Schweißautomat (1) nach einem der vorangegangenen Ansprüche, **dadurch gekennzeichnet, dass** die Spannvorrichtung (17) in der offenen und der geschlossenen Stellung arretierbar ist.

6. Schweißautomat (1) nach Anspruch 5, **dadurch gekennzeichnet, dass** das federnde Element (9) derart an dem Tragelement (2') angeordnet ist, dass bei der Bewegung der Spannvorrichtung (17) in die jeweilige Endstellung der Spannvorrichtung (17), die Wirkachse (10) der Federkraft des federnden Elements (9) eine Drehachse (7) des Doppeldrehgelenks (4) durchschreitet, so dass ein Teil der Federkraft gegen ein Herausschwenken des Doppeldrehgelenks (4) aus der jeweiligen Endstellung gerichtet ist.

7. Schweißautomat (1) nach einem der vorangegangenen Ansprüche, **dadurch gekennzeichnet, dass** durch Schwenken der Spannvorrichtung (17) die Heizeinrichtung (16) an die aneinander gefügten Ausleger (3, 3') heranführbar ist.

8. Schweißautomat (1) nach Anspruch 7, **dadurch gekennzeichnet, dass** der Betätigungshebel (5) mit einem weiteren Doppeldrehgelenk (14) verbunden ist, das wiederum mit der Heizeinrichtung (16) verbunden ist, so dass über den Betätigungshebel (5) der Spannvorrichtung (17) die Heizeinrichtung (16) ein- und ausfahrbar ist.

9. Schweißautomat (1) nach einem der vorangegangenen Ansprüche, **dadurch gekennzeichnet, dass** die Heizeinrichtung (16) als ein Heißluftgebläse mit einer auf die zu verschweißende Kunststoffbahnen ausgerichteten Heißluftdüse und/oder als ein zwischen den Kunststoffbahnen angeordneter Heizkeil ausgeführt ist.

10. Schweißautomat (1) nach Anspruch 7, **dadurch gekennzeichnet, dass** die Heizeinrichtung (16) gegenüber den Auslegern (3, 3') linear verfahrbar oder schwenkbar angeordnet ist.

## Claims

1. Automatic welding machine (1) for welding plastic webs, with a movable supporting frame (2), a heating device (16) for partially melting the plastic webs, at least two opposing booms (3, 3') with pressing and advancing rollers (11, 11'), at least one driving device and a tensioning device (17) that is mounted on the supporting frame (2) and comprises an actuating element (5) for reversibly joining the booms (3, 3') and applying a tension force between these, having an open position in which the opposing booms (3, 3') are separated from one another by a gap and a closed position in which the opposing booms (3, 3') are joined to one another and braced with respect to one another, one boom (3) being mounted pivotably in relation to the other boom (3') and being able to be brought from the open into the closed position by the actuation of the tensioning device (17), whereby the tensioning device (17) comprises a supporting element (2') connected to the supporting frame (2) and a spring-loaded element (9) for generating the tension force and the spring-loaded element (9), at one end, is rigidly connected to the supporting element (2'), **characterized in that,** at the other end, the spring-loaded element (9) is connected to the actuating element designed as an actuating lever (5) so as to pivot about an axis (8); the actuating lever (5) is mounted on the supporting frame (2) so as to pivot about a further axis (7) and thus forms a double swivel joint (4) for the spring-loaded element (9), and whereby pivoting the actuating lever (5) out of the open position into the closed position causes the spring-loaded element (9) to be tensioned and thereby the pivotable boom (3) of the supporting element (2') is brought out of the open position into the closed position, whereby the supporting element (2') and the pivotable boom (3) are rigidly connected to one another and pivotable about a shared axis (13).

2. Automatic welding machine (1) according to claim 1, **characterized in that** the tension force is defined by replacing and/or preloading the spring-loaded element (9).

3. Automatic welding machine (1) according to any one of the preceding claims, **characterized in that** the spring-loaded element (9) is designed as a helical spring (9).

4. Automatic welding machine (1) according to any one of the preceding claims, **characterized in that** the tensioning device (17) can be operated by way of the actuating lever (5) rigidly connected to the double swivel joint (4) and/or the double swivel joint (4) can be pivoted between the open and closed positions by way of a motor.

5. Automatic welding machine (1) according to any one of the preceding claims, **characterized in that** the tensioning device (17) can be locked in the open position and the closed position.

6. Automatic welding machine (1) according to claim 5, **characterized in that** the spring-loaded element (9) is disposed on the supporting element (2') such that, during the movement of the tensioning device (17) into the respective end position of the tensioning device (17), the axis of action (10) of the spring force of the spring-loaded element (9) traverses a rotational axis (7) of the double swivel joint (4) so that a portion of the spring force is directed against a pivoting of the double swivel joint (4) out of the respective end position.

7. Automatic welding machine (1) according to any one of the preceding claims, **characterized in that** pivoting of the tensioning device (17) allows the heating device (16) to be moved close to the booms (3, 3') that are joined to one another.

8. Automatic welding machine (1) according to claim 7, **characterized in that** the actuating lever (5) is connected to a further double swivel joint (14), which in turn is connected to the heating device (16), so that the heating device (16) can be retracted and extended by way of the actuating lever (5) of the tensioning device (17).

9. Automatic welding machine (1) according to any one of the preceding claims, **characterized in that** the heating device (16) is designed as a hot air blower comprising a hot air nozzle that is oriented at the plastic webs to be fused and/or as a hot wedge disposed between the plastic webs.

10. Automatic welding machine (1) according to claim 7, **characterized in that** the heating device (16) is disposed so as to be linearly displaceable or pivotable in relation to the booms (3, 3').

## Revendications

1. Machine (1) de soudage automatique dévolue au soudage de nappes de matière plastique, équipée d'un cadre mobile de support (2) ; d'un appareil de chauffage (16), conçu pour provoquer une fusion desdites nappes de matière plastique ; d'au moins deux étriers opposés (3, 3') en porte-à-faux, munis de rouleaux (11 ; 11') de pression et d'avance ; d'au moins un système d'entraînement ; ainsi que d'un dispositif de serrage (17), monté sur ledit cadre de support (2) et doté d'un élément d'actionnement (5) affecté au regroupement réversible desdits étriers (3, 3') en porte-à-faux et à l'application d'une force de serrage entre ces derniers, incluant une position ouverte dans laquelle les étriers opposés (3, 3') en porte-à-faux sont séparés l'un de l'autre par un espace interstitiel, et une position fermée dans laquelle lesdits étriers opposés (3, 3') en porte-à-faux sont regroupés et serrés l'un contre l'autre, sachant qu'un étrier (3) en porte-à-faux est monté pivotant par rapport à l'autre étrier (3') en porte-à-faux et peut être amené de la position ouverte à la position fermée, suite à l'actionnement dudit dispositif de serrage (17),
ledit dispositif de serrage (17) comprenant un élément de support (2'), relié au cadre de support (2), et un élément élastique (9) conçu pour engendrer la force de serrage, lequel élément élastique (9) est relié rigidement audit élément de support (2') au niveau de son extrémité, **caractérisée par le fait que** l'élément élastique (9) est relié au niveau de son autre extrémité, avec faculté de pivotement autour d'un axe (8), à l'élément d'actionnement réalisé sous la forme d'un levier d'actionnement (5),
lequel levier d'actionnement (5) est monté sur le cadre de support (2) avec faculté de pivotement autour d'un axe supplémentaire (7) et forme, de la sorte, une double articulation tournante (4) dédiée audit élément élastique (9), et
sachant que le pivotement du levier d'actionnement (5), de la position ouverte à la position fermée, a pour effets de bander ledit élément élastique (9) et d'amener, de ce fait, l'étrier pivotant (3) en porte-à-faux de l'élément de support (2') de la position ouverte à la position fermée,
ledit élément de support (2'), et ledit étrier pivotant (3) en porte-à-faux, étant reliés rigidement l'un à l'autre et étant aptes à pivoter autour d'un axe commun (13).

2. Machine (1) de soudage automatique selon la revendication 1, **caractérisée par le fait que** la force de serrage est définie par un remplacement et/ou par une précontrainte de l'élément élastique (9).

3. Machine (1) de soudage automatique selon l'une des revendications précédentes, **caractérisée par le fait que** l'élément élastique (9) est réalisé sous la forme d'un ressort hélicoïdal (9).

4. Machine (1) de soudage automatique selon l'une des revendications précédentes, **caractérisée par le fait que** le dispositif de serrage (17) peut être manoeuvré par l'intermédiaire du levier d'actionnement (5) relié rigidement à la double articulation tournante (4) ; et/ou ladite double articulation tournante (4) peut pivoter, par l'intermédiaire d'un moteur, entre les positions ouverte et fermée.

5. Machine (1) de soudage automatique selon l'une des revendications précédentes, **caractérisée par le fait que** le dispositif de serrage (17) peut être arrêté dans les positions ouverte et fermée.

6. Machine (1) de soudage automatique selon la revendication 5, **caractérisée par le fait que** l'élément élastique (9) est implanté sur l'élément de support (2') de façon telle que, lors du mouvement du dispositif de serrage (17) vers la position extrême considérée dudit dispositif de serrage (17), l'axe efficace (10) de la force élastique dudit élément élastique (9) franchisse un axe de rotation (7) de la double articulation tournante (4), de sorte qu'une partie de ladite force élastique est dirigée en opposition à une excursion pivotante de ladite double articulation tournante (4), à partir de la position extrême respective.

7. Machine (1) de soudage automatique selon l'une des revendications précédentes, **caractérisée par le fait que**, sous l'effet d'un pivotement du dispositif de serrage (17), l'appareil (16) peut être rapproché des étriers (3, 3') en porte-à-faux à l'état regroupé.

8. Machine (1) de soudage automatique selon la revendication 7, **caractérisée par le fait que** le levier d'actionnement (5) est relié à une double articulation tournante (14) supplémentaire reliée, à son tour, à l'appareil (16) de façon telle que ledit appareil (16) puisse être rétracté et déployé par l'intermédiaire dudit levier d'actionnement (5) du dispositif de serrage (17).

9. Machine (1) de soudage automatique selon l'une des revendications précédentes, **caractérisée par le fait que** l'appareil de chauffage (16) est réalisé sous la forme d'une soufflante à air chaud, pourvue d'une buse à air chaud orientée vers les nappes de matière plastique vouées au soudage, et/ou sous la forme d'un coin chauffant interposé entre lesdites nappes de matière plastique.

10. Machine (1) de soudage automatique selon la revendication 7, **caractérisée par le fait que** l'appareil (16) est agencé à déplacement linéaire ou à pivotement par rapport aux étriers (3, 3') en porte-à-faux.
